# FASCICULE DE BREVET EUROPEEN

(11) **EP 2 846 456 B1**
(45) Date de publication et mention de la délivrance du brevet: **24.10.2018**
(21) Numéro de dépôt: 14180849.3
(22) Date de dépôt: 13.08.2014
(51) Int. Cl.: H02P 25/02, H02P 25/06, H02P 3/06, H02K 7/06, B25B 27/10, H02P 25/032, F16H 25/20

(54) **Dispositif de détection de butée arrière sur un actionneur linéaire**
Vorrichtung zur Detektion des hinteren Anschlags auf einem linearen Stellglied
Device for detecting a rear stop on a linear actuator

(30) Priorité: 20.08.2013 FR 1358086
(43) Date de publication de la demande: 11.03.2015
(73) Titulaire: Virax, 51200 Epernay (FR)
(72) Inventeur: Da Rocha, Franck, 51500 Puisieulx (FR)
(74) Mandataire: Lavoix

(56) Documents cités:
- EP-A1- 0 623 989
- FR-A1- 2 873 514
- US-A1- 2002 074 866

## Description

La présente invention concerne un actionneur linéaire comportant des moyens d'entraînement d'un équipage mobile entre une position de repos et une position active, et un module électronique de commande des moyens d'entraînement.

L'invention s'applique à des actionneurs linéaires, notamment électro-mécaniques, destinés à recevoir un outil, par exemple un outil amovible. L'outil est actionné par un équipage mobile de l'actionneur. Par exemple, un tel outil est un outil de travail de tubes.

Il est généralement nécessaire de détecter l'arrivée en bout de course de l'équipage mobile, sous peine d'endommager l'actionneur.

FR-A-2 873 514 décrit un actionneur linéaire propre à actionner un outil par le biais d'une vis entraînée en translation par un moteur électrique dans les deux sens le long de son axe, désignés par avant et arrière. Cet actionneur comporte des capteurs, en l'occurrence des capteurs à effet Hall, pour détecter le passage d'un marqueur solidaire de la vis, en l'occurrence un aimant, et permettre l'arrêt du moteur lorsque la vis arrive en bout de course avant et/ou arrière.

Néanmoins, un tel actionneur ne donne pas entière satisfaction. En effet, la présence des capteurs se traduit par des coûts de fabrication supplémentaires et augmente l'encombrement et le poids de l'actionneur.

Selon son abrégé, US 2002/074866 décrit un actionneur linéaire comportant des amortisseurs avant et arrière.

Un but de l'invention est de proposer un actionneur dont le nombre de capteurs est réduit.

A cet effet, l'invention a pour objet un actionneur selon la revendication 1.

En effet, un pic de la dérivée de la grandeur mesurée est associé à la butée de l'équipage mobile contre les moyens d'amortissement, ce qui indique son arrivée en bout de course arrière. L'interruption du fonctionnement des moyens d'entraînement empêche la poursuite du mouvement de l'équipage mobile, qui aurait potentiellement pour conséquence d'endommager l'actionneur.

Suivant des modes particuliers de réalisation, l'invention présente l'une ou plusieurs des caractéristiques suivantes, prise(s) isolément ou suivant toute combinaison techniquement possible :
- le module électronique est propre à commander les moyens d'interruption du fonctionnement des moyens d'entraînement si ladite grandeur excède une deuxième valeur prédéterminée, au cours de la phase de retour en position de repos de l'équipage mobile.
- les moyens d'amortissement comportent un amortisseur déformable et de forme convergente vers l'avant selon un axe de déplacement de l'équipage mobile.
- la phase de retour en position de repos comporte une première étape de recul de première durée prédéterminée et une deuxième étape de mise au repos, et la vitesse de l'équipage mobile durant la première étape est sensiblement constante et en moyenne supérieure à la vitesse moyenne de l'équipage mobile durant la deuxième étape.
- lesdits moyens d'entraînement comportent un moteur électrique, et ladite grandeur est l'intensité instantanée du courant d'alimentation du moteur.
- l'actionneur est alimenté par une batterie.
- le module électronique comprend des moyens pour modifier ladite première durée prédéterminée en fonction du niveau de charge de la batterie.

L'invention sera mieux comprise à l'aide de la description qui va suivre, donnée uniquement à titre d'exemple et faite en se référant aux dessins annexés sur lesquels :
- la figure 1 est une représentation schématique d'un actionneur selon l'invention ;
- la figure 2 est un schéma synoptique du module électronique de l'actionneur de la figure 1 ;
- la figure 3 est un graphe représentant des courbes de l'intensité consommée par l'actionneur de la figure 1 et de la dérivée temporelle de cette intensité, durant une phase de retour en position de repos.

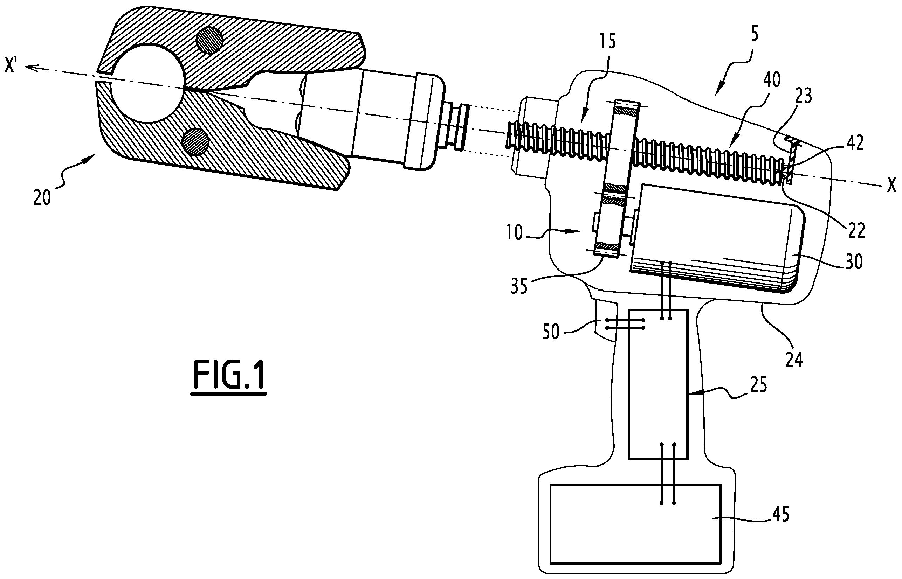

Comme cela apparaît sur la figure 1, un actionneur 5 linéaire comporte des moyens 10 d'entraînement d'un équipage mobile 15 le long d'un axe longitudinal X-X' pour actionner un outil 20, par exemple amovible.

L'outil 20 est par exemple un outil de travail de tubes.

L'actionneur comporte également un amortisseur 22. L'amortisseur 22 est disposé dans l'actionneur et est traversé par l'axe X-X'. Par exemple, l'amortisseur 22 est fixé à un support 23 solidaire du corps 24 de l'actionneur 5.

Avantageusement, l'amortisseur 22 présente une forme convergente vers l'avant dans la direction X-X'. De préférence, l'amortisseur 22 est réalisé dans un matériau déformable. Par exemple, l'amortisseur 22 est une calotte sphérique en caoutchouc.

Les moyens 10 d'entraînement sont commandés par un module électronique 25. Les moyens 10, l'équipage mobile 15 et le module électronique 25 sont disposés dans le corps 24 de l'actionneur 5.

Par exemple, les moyens 10 sont formés par un moteur électrique 30, par exemple un moteur à courant continu, et un réducteur 35.

Par exemple, l'équipage mobile 15 est une vis 40 s'étendant selon l'axe longitudinal X-X'. La vis 40 est entraînée en translation le long de l'axe X-X' par le moteur 30, par l'intermédiaire du réducteur 35, entre une position avancée de la vis 40 hors du corps 24 de l'actionneur 5, dite position active, et une position reculée, dite position de repos, représentée sur la figure 1, dans laquelle une partie arrière 42 de la vis 40 est en contact avec l'amortisseur 22.

Le module électronique 25 contrôle en particulier l'alimentation électrique du moteur 30 fournie par une source d'alimentation, par exemple une batterie 45.

L'actionneur 5 comporte également un interrupteur manuel 50 pour permettre à l'utilisateur de commander les mouvements de l'actionneur 5. L'interrupteur manuel 50 permet par exemple d'enclencher le retour de l'équipage mobile 15 dans la position de repos.

L'interrupteur manuel 50 est connecté au module électronique 25.

De préférence, le module électronique 25 est également propre à commander le retour de l'équipage mobile 15 dans la position de repos, par exemple après que l'équipage mobile 15 a passé une durée prédéterminée dans la position active.

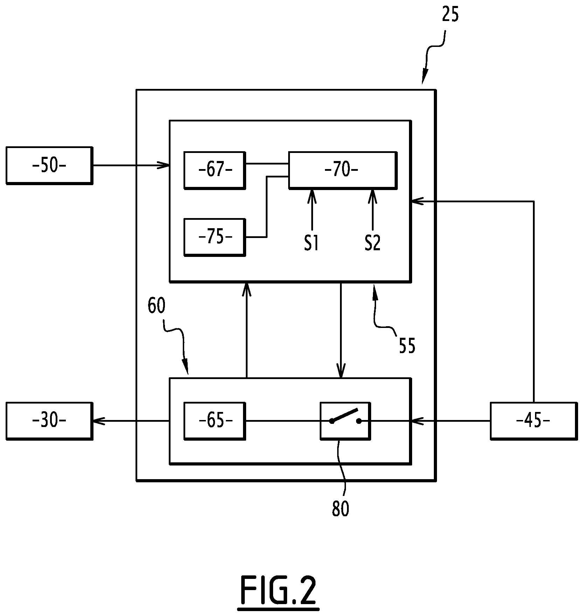

Comme cela apparaît sur la figure 2, le module électronique 25 comporte un module de commande 55 connecté à un module de puissance 60.

Le module de puissance 60 assure la gestion de l'alimentation électrique du moteur 30 et est interposé entre la batterie 45 et le moteur 30.

Le module de puissance 60 comprend des moyens 65 d'acquisition de l'intensité instantanée du courant d'alimentation du moteur 30.

L'interrupteur 50 est connecté au module de commande 55.

Le module de commande 55 comporte des moyens 67 de calcul de la dérivée par rapport au temps de l'intensité du courant d'alimentation.

Le module de commande 55 comporte en outre des moyens 70 de comparaison de la dérivée par rapport au temps de l'intensité du courant d'alimentation à une première valeur prédéterminée S1 et de l'intensité de ce courant à une deuxième valeur prédéterminée S2, pour actionner un interrupteur principal 80 de coupure de l'alimentation du moteur 30 si la dérivée de l'intensité du courant d'alimentation, respectivement l'intensité de ce courant, devient supérieure à la première valeur prédéterminée S1, respectivement la deuxième valeur prédéterminée S2, au cours d'une phase de retour de l'équipage mobile 15 en position de repos, dans les conditions décrites plus loin.

Le module de commande 55 comporte également une horloge 75 pour mesurer le temps écoulé depuis le début de la phase de retour en position de repos de l'équipage mobile 15.

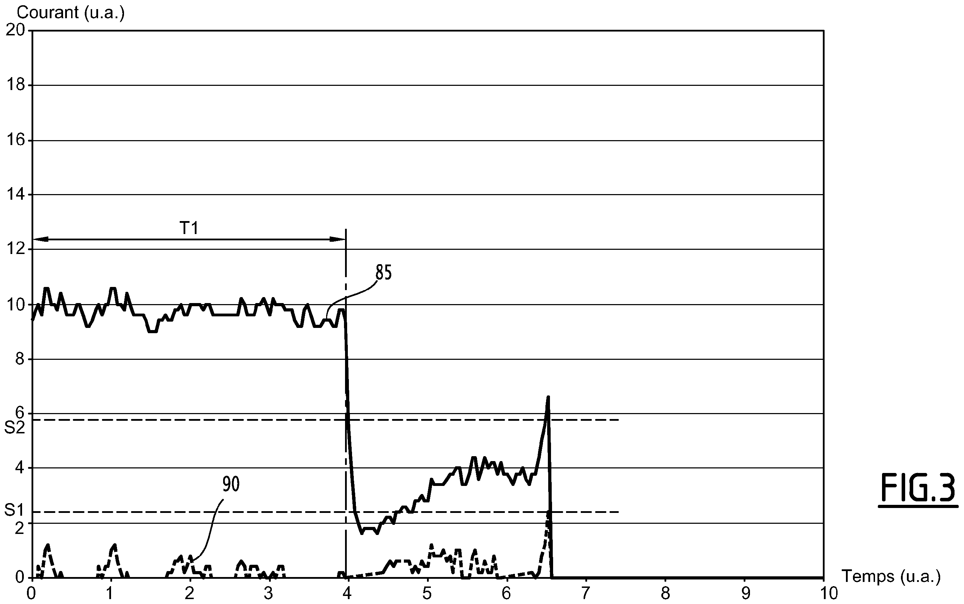

Le fonctionnement de l'actionneur 5 va être explicité en relation avec la figure 3.

La figure 3 représente la variation au cours du temps du courant d'alimentation du moteur 30, courbe 85, et de la dérivée par rapport au temps de ce courant, courbe 90, suite à l'enclenchement, par exemple par l'intermédiaire de l'interrupteur manuel 50, du retour de l'équipage mobile 15 dans la position de repos à partir de la position active. Dans un moteur électrique à courant continu, l'intensité du courant d'alimentation du moteur et l'effort fourni par celui-ci étant proportionnels l'un à l'autre, les courbes 85 et 90 sont bien représentatives de l'effort fourni par le moteur 30 et de la dérivée par rapport au temps de cet effort, respectivement.

Durant la phase de retour vers la position de repos à partir de la position active, la vis 40 progresse dans le corps 24 de l'actionneur 5, la partie arrière 42 de la vis 40 se rapprochant de l'amortisseur 22. De préférence, le module électronique 25 commande le moteur 30 pour entraîner la vis 40 durant une première étape de recul de première durée prédéterminée T1 à une première vitesse v1, par exemple une vitesse v1 constante.

A l'issue de la première durée prédéterminée T1, par exemple 3,9 unités de temps, le module électronique 25 commande le moteur 30 pour entraîner la vis 40 vers la position de repos à une deuxième vitesse v2 durant une deuxième étape de mise au repos.

Avantageusement, la vitesse v1 est supérieure à la vitesse v2 pour permettre un retour rapide de la vis 40 dans la position de repos et ainsi réduire la durée du cycle d'utilisation de l'actionneur 5, tout en limitant la vitesse d'impact de la partie arrière 42 de la vis 40 contre l'amortisseur 22.

Lorsque la partie arrière 42 de la vis 40 entre en contact avec l'amortisseur 22, le moteur 30 fournit un effort supplémentaire pour compenser la résistance de l'amortisseur 22, ce qui se traduit par une augmentation du courant d'alimentation du moteur 30 et une variation de sa dérivée par rapport au temps, comme cela apparaît sur les courbes 85 et 90 respectivement, à partir de 6,3 unités de temps.

Quand, à 6,5 unités de temps, la valeur de la dérivée de l'intensité du courant d'alimentation du moteur 30 dépasse la première valeur prédéterminée S1, et la valeur de l'intensité du courant d'alimentation du moteur 30 dépasse la deuxième valeur prédéterminée S2, les moyens de comparaison 70 actionnent l'interrupteur principal 80.

De préférence, la première durée prédéterminée T1 dépend du niveau de charge de la batterie 45. Par exemple, la première durée prédéterminée T1 est une fonction linéaire décroissante de la charge de la batterie 45, pour compenser la baisse de puissance fournie par la batterie 45 au cours de sa décharge.

Le recours à un amortisseur 22 en matériau déformable limite l'amplitude des pics d'intensité et de dérivée de l'intensité, ce qui permet une meilleure protection du moteur 30.

En outre, du fait de la forme convergente de l'amortisseur 22 le long de l'axe X-X', la surface de contact entre la partie arrière 42 de la vis 40 et l'amortisseur 22 est faible, ce qui réduit le couple s'exerçant sur l'amortisseur 22 et augmente sa durée de vie.

Selon un autre mode de réalisation (non représenté) d'un actionneur selon l'invention, les moyens d'entraînement 10 comportent des moyens hydrauliques, par exemple un vérin. Le module électronique 25 comporte par exemple des moyens d'acquisition d'une grandeur dépendant de l'effort instantané fourni par le vérin, par exemple la pression du fluide d'alimentation du vérin.

## Revendications

1. Actionneur (5) linéaire comportant des moyens (10) d'entraînement d'un équipage mobile (15) entre une position de repos et une position active, et un module électronique (25) de commande des moyens (10) d'entraînement,
- l'actionneur comporte en outre des moyens d'amortissement du retour en position de repos de l'équipage mobile (15),
- le module électronique (25) comporte des moyens d'acquisition (65, 67) d'une grandeur représentative de l'effort instantané fourni par les moyens (10) d'entraînement, et de la dérivée par rapport au temps de cette grandeur,
- le module électronique (25) est propre à commander les moyens (10) d'entraînement pour que la vitesse de l'équipage mobile (15) durant la phase de retour de la position active vers la position de repos soit décroissante sur au moins une partie de ladite phase de retour, et
- le module électronique (25) est propre à commander des moyens (80) d'interruption du fonctionnement des moyens (10) d'entraînement si ladite dérivée excède une première valeur prédéterminée (S1) au cours de la phase de retour vers la position de repos de l'équipage mobile (15).

2. Actionneur (5) selon la revendication 1 dans lequel le module électronique (25) est propre à commander les moyens (80) d'interruption du fonctionnement des moyens (10) d'entraînement si ladite grandeur excède une deuxième valeur prédéterminée (S2), au cours de la phase de retour en position de repos de l'équipage mobile (15).

3. Actionneur (5) selon la revendication 1 ou 2, dans lequel les moyens d'amortissement comportent un amortisseur (22) déformable et de forme convergente vers l'avant selon un axe (X-X') de déplacement de l'équipage mobile (15).

4. Actionneur (5) selon l'une quelconque des revendications 1 à 3, dans lequel la phase de retour en position de repos comporte une première étape de recul de première durée prédéterminée (T1) et une deuxième étape de mise au repos, et en ce que la vitesse (v1) de l'équipage mobile (15) durant la première étape est sensiblement constante et en moyenne supérieure à la vitesse (v2) moyenne de l'équipage mobile (15) durant la deuxième étape.

5. Actionneur (5) selon l'une quelconque des revendications précédentes, dans lequel lesdits moyens (10) d'entraînement comportent un moteur électrique (30), et en ce que ladite grandeur est l'intensité instantanée du courant d'alimentation du moteur (30).

6. Actionneur (5) selon l'une quelconque des revendications précédentes, qui est alimenté par une batterie (45).

7. Actionneur (5) selon la revendication 6, dans lequel le module électronique (25) comprend des moyens pour modifier ladite première durée prédéterminée (T1) en fonction du niveau de charge de la batterie (45).

## Patentansprüche

1. Lineares Stellglied (5), aufweisend Antriebsmittel (10) eines zwischen einer Ruhestellung und einer aktiven Stellung beweglichen Elements (15) und ein elektronisches Steuermodul (25) der Antriebsmittel (10),
- wobei das Stellglied ferner Dämpfungsmittel der Rückkehr in Ruhestellung des mobilen Elements (15) aufweist,
- wobei das elektronische Modul (25) Erfassungsmittel (65, 67) einer repräsentativen Größe der momentanen Kraft, bereitgestellt von den Antriebsmitteln (10), und der Ableitung in Bezug auf die Zeit dieser Größe, aufweist,
- wobei das elektronische Modul (25) imstande ist, die Antriebsmittel (10) zu steuern, damit die Geschwindigkeit des mobilen Elements (15) während der Rückkehrphase aus der aktiven Stellung in die Ruhestellung über mindestens einen Teil der Rückkehrphase sinkt, und
- wobei das elektronische Modul (25) imstande ist, die Unterbrechungsmittel des Betriebs der Antriebsmittel (10) zu steuern, wenn die Ableitung während der Rückkehrphase in die Ruhestellung des mobilen Elements (15) einen ersten vorbestimmten Wert (S1) überschreitet.

2. Stellglied (5) nach Anspruch 1, wobei das elektronische Modul (25) imstande ist, die Unterbrechungsmittel (80) des Betriebs der Antriebsmittel (10) zu steuern, wenn die Größe während der Rückkehrphase in die Ruhestellung des mobilen Elements (15) einen zweiten vorbestimmten Wert (S2) überschreitet.

3. Stellglied (5) nach Anspruch 1 oder 2, wobei die Dämpfungsmittel eine verformbare Dämpfungseinrichtung (22) konvergenter Form nach vor gemäß einer Verlagerungsachse (X-X') des mobilen Elements (15) aufweisen.

4. Stellglied (5) nach einem der Ansprüche 1 bis 3, wobei Rückkehrphase in Ruhestellung einen ersten Rückkehrschritt erster vorbestimmter Dauer (T1) und einen zweiten Schritt des Inruheversetzens aufweist, und dass die Geschwindigkeit (v1) des mobilen Elements (15) während des ersten Schritts etwa konstant und im Durchschnitt höher als die durchschnittliche Geschwindigkeit (v2) des mobilen Elements (15) während des zweiten Schritts ist.

5. Stellglied (5) nach einem der vorangehenden Ansprüche, wobei die Antriebsmittel (10) einen Elektromotor (30) aufweisen und dass die Größe die momentane Stärke des Versorgungsstroms des Motors (30) ist.

6. Stellglied (5) nach einem der vorangehenden Ansprüche, das von einer Batterie (45) versorgt wird.

7. Stellglied (5) nach Anspruch 6, wobei das elektronische Modul (25) Mittel umfasst, um die erste vorbestimmte Dauer (T1) in Abhängigkeit vom Ladezustand der Batterie (45) zu ändern.

## Claims

1. A linear actuator (5) including means (10) for driving a movable assembly (15) between a rest position and an active position, and an electronic module (25) for controlling the driving means (10),
the actuator further includes means for damping the return into the rest position of the movable assembly (15),
the electronic module (25) includes means (65, 67) for acquiring a representative quantity of the instantaneous force provided by the driving means (10), and of the time derivative of this quantity,
the electronic module (25) is able to control the driving means (10) so that the speed of the movable assembly (15) during the phase for returning from the active position to the rest position is decreasing over at least one portion of said return phase,
the electronic module (25) is able to control means (80) for interrupting the operation of the driving means (10) if said derivative exceeds a first predetermined value (S1) during the phase for returning the movable assembly (15) to the rest position.

2. The actuator (5) according to claim 1, wherein the electronic module (25) is able to control the means (80) for interrupting the operation of the driving means (10) if said quantity exceeds a second predetermined value (S2), during the phase for returning the movable assembly (15) to the rest position.

3. The actuator (5) according to claim 1 or 2, wherein the damping means include a deformable damper (22) and with a forward convergent shape along a displacement axis (X-X') of the movable assembly (15).

4. The actuator (5) according to any of claims 1 to 3, wherein the phase for returning to the rest position includes a first backward step of a predetermined time period (T1) and a second step for being brought to rest, and in that the speed (v1) of the movable assembly (15) during the first step is substantially constant and on average greater than the average speed (v2) of the movable assembly (15) during the second step.

5. The actuator (5) according to any of the preceding claims, wherein said driving means (10) include an electric motor (30), and in that said quantity is the instantaneous intensity of the power supply current of the motor (30).

6. The actuator (5) according to any of the preceding claims, wherein it is powered by a battery (45).

7. The actuator (5) according to claim 6, wherein the electronic module (25) comprises means for modifying said predetermined time period (T1) depending on the charge level of the battery (45).
